# EUROPEAN PATENT SPECIFICATION

(11) **EP 0 868 330 B1**
(45) Date of publication and mention of the grant of the patent: **21.03.2001**
(21) Application number: 96941771.6
(22) Date of filing: 11.12.1996
(51) Int. Cl.: B60R 25/00

(54) **VEHICLE IMMOBILISER**
FAHRZEUGWEGFAHRSPERRE
DISPOSITIF D'IMMOBILISATION D'UN VEHICULE

(30) Priority: 19.12.1995 GB 9529895; 21.03.1996 GB 9605977
(43) Date of publication of application: 07.10.1998
(73) Proprietor: Wignall, David, Wigan WN1 2SF (GB); Thomas, Roy, Wheelton, Chorley PR6 8HD (GB)
(72) Inventor: THOMAS, Roy, Wheelton Chorley PR6 8HD (GB)
(74) Representative: Holmes, Matthew Peter
(86) International application number: GB9603057
(87) International publication number: WO9722501

(56) References cited:
- CH-A- 644 802
- GB-A- 2 162 480
- GB-A- 2 265 882
- US-A- 1 462 118

## Description

The present invention relates to a vehicle immobiliser as defined in the preamble of claim 1 and known from GB-A-2162480. Particularly, but not exclusively, the invention relates to a mechanical immobiliser for inhibiting the theft of large vehicles such as caravans and motor vehicles such as cars.

The theft of vehicles of all kinds has become a significant problem. A wide variety of vehicle immobilising devices are available in attempts to combat theft. Such devices range from highly sophisticated electronic devices to relatively simple mechanical and electro-mechanical devices. For example, in the case of non-powered vehicles such as caravans, mechanical devices such as wheel clamps and hitch locks (which are intended to prevent a caravan from being hitched to a vehicle) are widely used in an attempt to prevent a caravan from being towed away. However, such conventional mechanical devices are relatively easily circumvented by the determined skilled thief using readily available tools such as a wrench, a blow torch or a Mig welder.

There is thus a continuing need to improve upon existing immobilisers and to develop new devices which are more difficult to circumvent and thus offer higher levels of security.

It is therefore an object of the present invention to provide a new vehicle immobiliser.

According to the present invention, there is provided a vehicle immobiliser comprising at least one ground engaging member which is in use fixed to the vehicle and which is moveable between a stowed position in which it is carried by the vehicle and a ground engaging position in which it is under load from the weight of the vehicle and inhibits movement of the vehicle, characterised in that, when in said ground engaging position, the ground engaging member is continuously urged towards the ground by a spring biasing force.

Provision of the spring biasing force provides several advantages. Firstly, it ensures that the ground engaging member makes good contact with the ground. In particular, it will tend to maintain the ground engaging member in contact with the ground even if the vehicle is jacked up or dragged across an uneven surface.

The spring biasing force may, for example, be provided by a pneumatic or mechanical spring means acting on the ground engaging member. Alternatively, the ground engaging member may itself be a spring member, which is held under tension by the weight of the vehicle when in said ground engaging position.

Use of an appropriate spring member can be advantageous in providing a hazard to tampering. That is, an attempt to cut through the spring member might release the spring force causing the spring member to react in a violent and dangerous manner which would deter tampering.

For example, in a preferred embodiment of the invention the ground engaging member is an elongate member which is pivotably fixed to the vehicle and a ground engaging end which contacts the ground when in said ground engaging position, and wherein drive means are provided for pivoting the ground engaging member to raise and lower said ground engaging end to thereby move the ground engaging member between said stowed and ground engaging positions respectively.

The pivot point may lie at or adjacent the end of the ground engaging member remote from said ground engaging end. or may lie at a position intermediate the two ends. In the latter case, the drive means may co-operate with the ground engaging member in a region between the pivot point and either end of the ground engaging member.

The drive means may, for example, comprise a drive screw rotation of which in one direction moves the ground engaging member from said stowed position to said ground engaging position, and rotation of which in the opposite direction returns the ground engaging member to the stowed position. Such a drive means preferably further comprises a guide member mounted to the drive screw such that rotation of the drive screw moves the guide member, in the direction of the axis of drive screw, the guide member co-operating with the ground engaging member so that movement of the guide member in opposite directions raises and lowers the ground engaging member respectively. The drive screw may be captive so that the guide member moves along the shift of the drive screw as it rotates.

The guide member is preferably a forked member having two arms which slideably embrace the ground engaging member.

The drive means may be adapted to be manually operated using a suitable tool, or it may be, for example, electrically actuated, or pneumatically or hydraulically actuated.

A variety of alternative forms of ground engaging member could be employed. For example, the ground engaging member could be a telescopic member or an elongate member which is mounted to the vehicle for reciprocating movement between said stowed and ground engaging positions. Alternatively, the ground engaging member could comprise a plurality of elements linked together in a "lazy tongs" arrangement.

Such forms of ground engaging member could be actuated in a variety of ways. For example, they could be electrically actuated, pneumatically or hydraulically actuated.

The ground engaging member can be configured, or more than one ground engaging member may be provided, to provide increased resistance to movement in two or more directions (including movement in any direction).

The present invention also provides a vehicle fitted with one or more vehicle immobilisers as defined above.

Specific embodiments of the present invention will now be described, by way of example only, with reference to the accompanying drawings, in which:
Figures 1 to 4 are perspective illustrations of individual components of a vehicle immobiliser in accordance with a first embodiment of the present invention;
Figures 5 and 6 are end and side views respectively of the assembled immobiliser according to the first embodiment of the present invention, with the various components in a "stowed" position;
Figures 7 and 8 are end and side elevations respectively of the vehicle immobiliser according to the first embodiment of the present invention, with the various components shown in a "ground engaging" position;
Figures 9 and 10 are schematic illustrations of the vehicle immobiliser according to the first embodiment of the present invention fitted to a vehicle;
Figure 11 is a schematic illustrations of a modification of the device of Figures 1 to 10;
Figures 12 and 13 illustrate schematically devices according to the present invention in use; and
Figures 14 to 16 illustrate modifications of the device of figures 1 to 8.

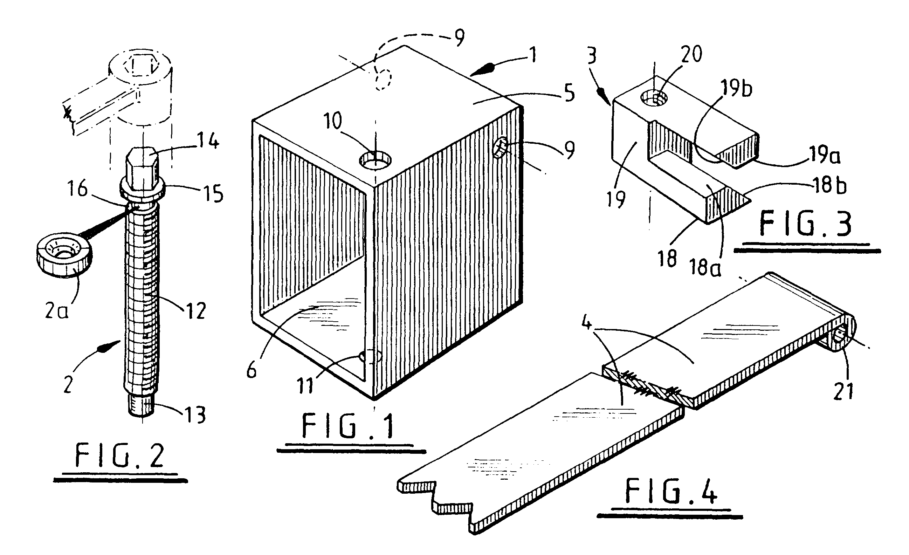

Referring to Figures 1 to 8, the illustrated vehicle immobiliser essentially comprises a steel housing 1 (shown in isolation in Figure 1), a drive screw 2 (shown in isolation in Figure 2), a guide member 3 (shown in isolation in Figure 3) and a leaf spring 4 (shown in isolation in Figure 4).

Referring in particular to Figure 1, the housing 1 comprises an open ended steel box section having a top wall 5, a bottom wall 6, and side walls 7 and 8 respectively. The side walls 7 and 8 are each provided with facing holes 9 towards a top corner thereof adjacent one open end of the housing 1. Towards the opposite open end of the housing 1, and adjacent the side wall 7, the top and bottom walls 5 and 6 are provided with facing holes 10 and 11 respectively, the hole 10 having a larger diameter than the hole 11.

Referring now in particular to Figure 2, the drive screw 2 comprises a screw threaded shaft 12 which has a relatively narrow lower end 13. The upper end of the drive screw 12 is provided with a hexagonal drive head 14 which is separated from the screw threaded shaft 12 by a circular flange 15. Between the flange 15 and the screw threaded shaft 12 the drive screw has a reduced diameter section 16 which is use receives a collar 2a as described in more detail below.

Turning now to the guide member 3 (which is shown in detail in Figure 3) this is a forked member having arms 17 and 18 which extend from a body portion 19, which is itself provided with a central screw threaded bore 20. Each arm 17 and 18 is bevelled along one edge thereof so as to define corresponding angled guide faces 17a and 17b, and 18a and 18b. The spacing of the arms 17 and 18 is such that the minimum gap therebetween is sufficient to receive the thickness of the leaf spring 4, in a manner to be described below.

Referring in particular to Figure 4, the leaf spring 4 is an elongate rectangular member which is scrolled at one end to define a bore 21 to receive a pivot (not shown).

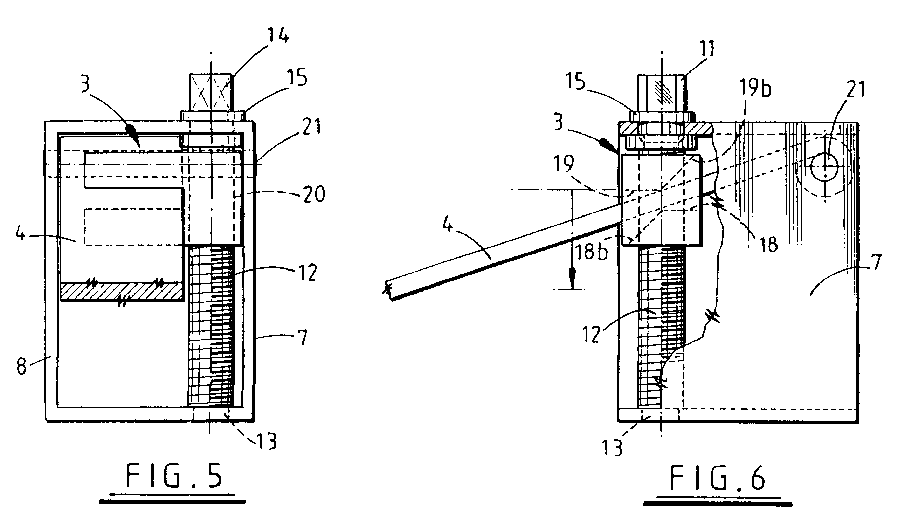

The assembly of the various components into the completed immobiliser will now be described with reference to Figures 5 to 8.

The leaf spring 4 is pivotably mounted to the housing 1 by way of a pivot (not shown) which extends through the holes 9 in the housing 1 and the bore 21 defined by the scrolled end of the leaf spring 4. The leaf spring 4 is mounted so that it extends from the housing 1 through the open end furthest away from the holes 9.

The guide member 3 is located on the leaf spring 4 such that the leaf spring 4 is slidably embraced between the arms 17 and 18. The shaft 12 of the drive screw 2 is then inserted through the relatively large hole 10 in the top wall 5 of the housing 1. The shaft 12 is screwed through the bore 20 in the drive member 3 and its relatively narrow lower end 13 is received within the hole 11 in the bottom wall 6 of the housing 1. The collar 2a is then welded closed around the reduced diameter section 16 of the shaft 12 to prevent the drive screw 2 passing back up through the hole 10. The drive screw 2 is thus held captive within the housing 1 by virtue of both the collar 2a and the flange 15. The overall arrangement is such that rotation of the drive screw drives the guide member 3 along its shaft which in turn causes the leaf spring 4 to pivot.

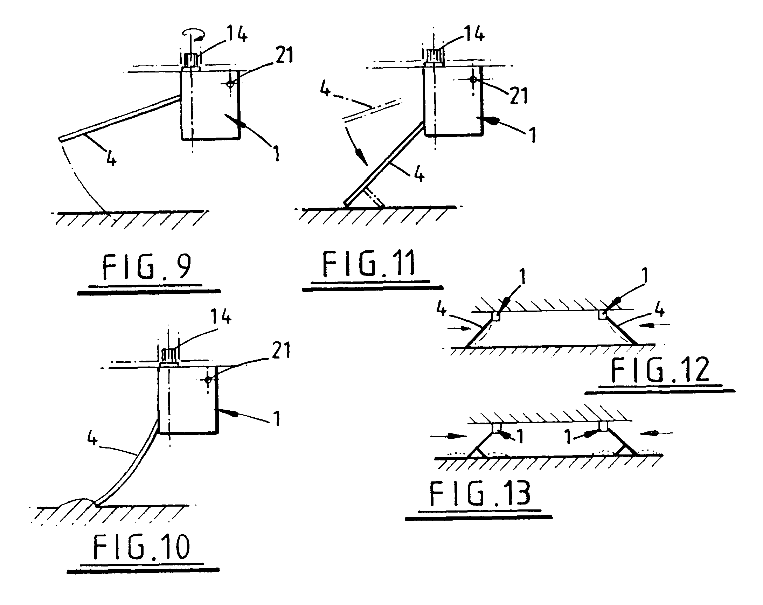

In use, the immobiliser is secured to the under side of a vehicle as is schematically illustrated in Figures 9 and 10. For instance, the upper wall 5 of the housing 1 may simply be welded to an appropriate site on the under side of the vehicle so that the head 14 of the drive screw 2 extends through an appropriate opening provided in the floor of the vehicle so as to be accessible from the inside the vehicle. For example, the immobiliser could be fitted to a vehicle such as a caravan and the drive screw head 14 could be accessed through an appropriate disguised panel in the floor of the caravan. In addition, a variety of locking mechanisms could be used to present unauthorised access to, or turning of, the drive screw. Moreover, the locking mechanism can be configured or positioned so that it cannot be readily tampered with. For instance, the locking mechanism could be disposed in a way which renders it difficult, if not impossible, to simply drill the lock out.

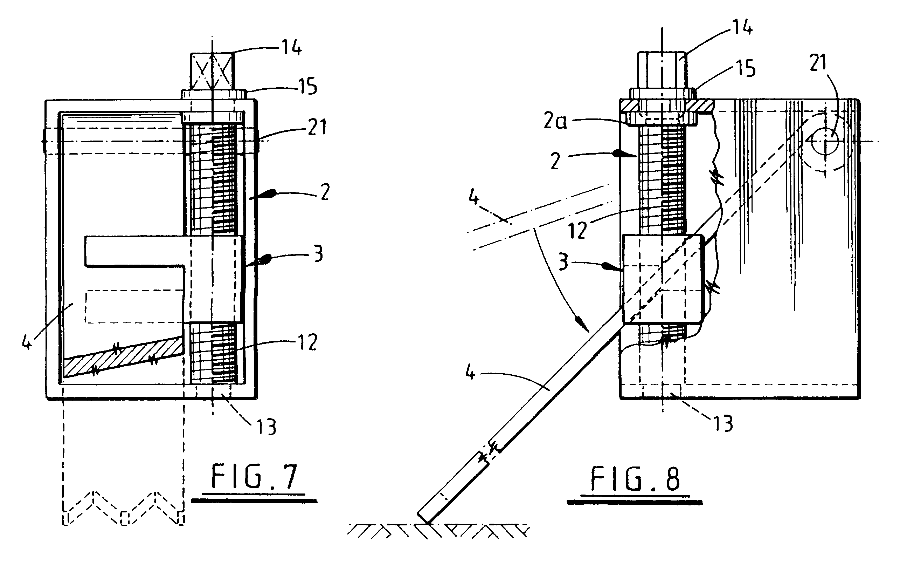

The leaf spring is movable between two positions: a stowed position (which is illustrated in Figures 5, 6 and 9) and a ground engaging position (which is illustrated in Figures 7. 8 and 10).

In the stowed position, the leaf spring is raised from the ground so that the vehicle may be moved. In this position, the drive member 3 is located at the upper end of the screw threaded shaft 12 of the drive screw 2 (as can be seen from Figure 5 and 6) which holds the leaf spring 4 in a raised position.

To operate the immobiliser when the vehicle is stationary, that is to lower the end of the leaf spring 4 so that it engages the ground, the drive screw 2 is rotated using an appropriate tool to turn the drive head 14 (such a tool might for example, be a simple manual hand tool or an electric power tool). As the captive drive screw 2 rotates the guide member 3 is forced along the shaft 12 towards the lower end of the housing 1. The downward movement of the guide member 3 lowers the leaf spring 4 by virtue of the engagement of the arms 17 and 18 around the leaf spring 4. In doing so. the guide surfaces 17a, 17b and 18b slide along a short length of the leaf spring 4. From the drawings it will be seen how the particular configuration of the arms 17 and 18, having bevelled edges as described above, accommodates the change in the angle of the leaf spring 4 as it lowered.

The lowering of the leaf spring 4 is continued until its end remote from the pivot engages the ground. Thereafter, further movement of the guide member 3 introduces tension into the leaf spring 4 so that its end is urged towards the ground by a combination of the weight of the vehicle and the spring force in the leaf spring 4. This ground engaging position is illustrated in Figures 7 and 8 are Figure 10.

To raise the leaf spring 4 into the stowed position the drive screw is simply rotated in the opposite direction so that the guide member 3 is moved by the shaft 12.

It will readily be appreciated that with the leaf spring 4 in the ground engaging position movement of the vehicle is inhibited. The force with which the leaf spring 4 engages the ground will depend upon the weight of the vehicle and the extent to which the leaf spring 4 is loaded.

The immobiliser is relatively difficult to circumvent for a number of reasons. Firstly, if the vehicle is simply jacked upwards, the end of the leaf spring 4 will nevertheless be biased into contact with the ground by its spring action. It will therefore be difficult to disengage the leaf spring 4 from the ground. Secondly, the drive screw cannot be actuated without first gaining access to the inside of the vehicle and locating the drive head 14. For instance, the drive head could be concealed at floor level and be provided with a locking mechanism which is difficult to circumvent (for example by being disposed so that it cannot be accessed by a power drill). Thirdly, the immobiliser can be located at a difficult to reach area beneath the vehicle so that it cannot readily be tampered with. Fourthly, if the immobiliser is tampered with, for instance either in an attempt to disengage the leaf spring from the housing or to cut through the leaf spring 4, the sudden release of spring force could have dangerous consequences. This would actively discourage such tampering.

It will be appreciated that many modifications to the detail of the above described embodiment of the invention could be made. For instance, the ground engaging end of the leaf spring 4 could be provided with one or more lateral projections to act as barbs, see for example Figure 11. Such an arrangement would improve the ability of the device to inhibit movement in more than one direction.

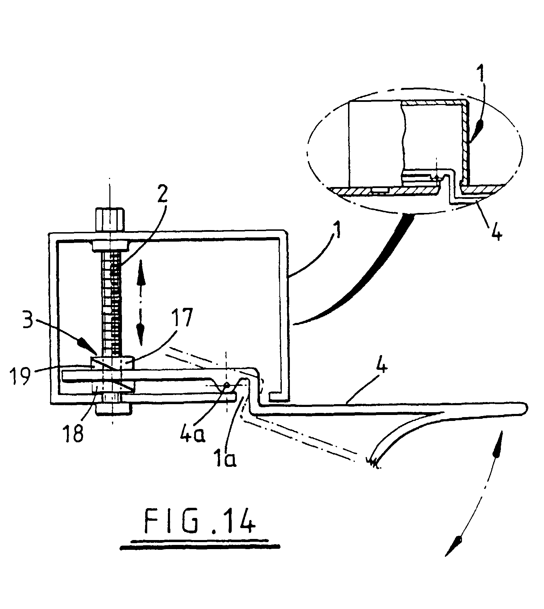

Similarly, more than one of the above described devices could be fitted to a single vehicle as, for example, shown in Figure 12 and 13. In an alternative arrangement, such immobilisers could be arranged so that the ground engaging members extend at right angles to each other.

One possible modification of the immobiliser illustrated in Figures 1 to 8 is illustrated in Figure 14. It will be seen that the immobiliser of Figure 14 is substantially the same as that of Figures 1 to 8 and thus like reference numerals are used for corresponding parts. A modified leaf spring 4 is pivotably attached to the housing 1 at a point 4a intermediate its ends. The housing 1 is modified in that its ends are closed but it is provided with an aperture 1a through which the spring 4 extends. The modified spring 4 is dog-legged where it passes through the aperture 1a.

Operation of the device is essentially the same as described above in relation to figures 1 to 8 except that with the modification of Figure 14 the spring 4 is lowered to the ground by raising the guide member 3.

This embodiment of the invention is particularly adapted for mounting above the floor of a vehicle. That is, the housing 1 can be fixed to the upper surface of the vehicle floor with the ground engaging member 4 extending through an appropriate opening provided in the floor of the vehicle by virtue of its dog-legged portion. The length of the dog-legged portion can be varied to suite the particular installation position (see for example the scrap view to Figure 14). Similarly, it will be appreciated that the housing 1 could simply be installed part way through the floor of the vehicle such that its upper half extends above the vehicle floor and its lower half extends below the vehicle floor.

It will be appreciated that the drive screw access could be varied from the vertical position shown, and if necessary universal or right angled drives could be incorporated (similar modifications could be made to the immobiliser of Figures 1 to 8).

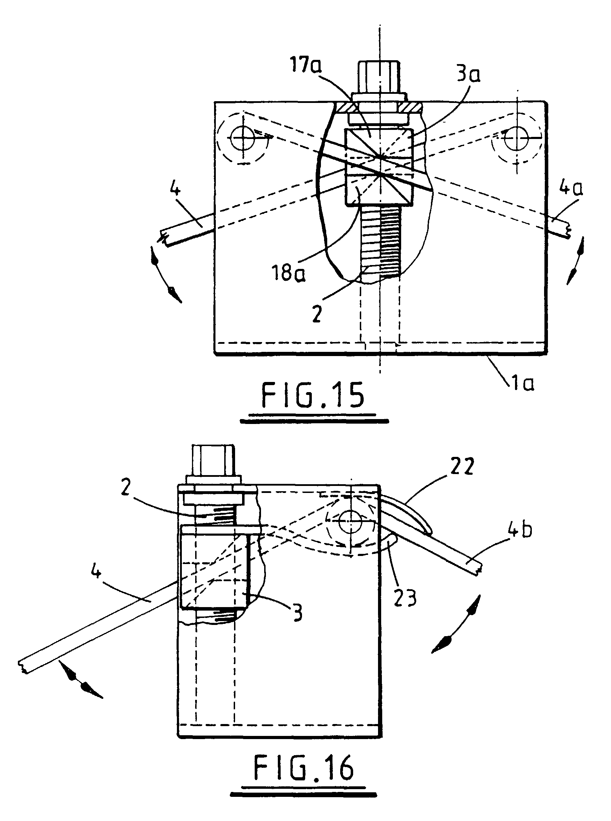

Two further examples of ways in which the above described device could be modified are illustrated in Figures 15 and 16. Figure 15 illustrates a device based closely on the device of Figures 1 to 10 but adapted to incorporate two ground engaging members, i.e. two leaf springs 4. As can be seen from Figure 14. the device comprises an extended housing 1 so that the drive screw 2 is now located centrally in the housing 1. A second leaf spring 4a is pivoted to the housing at the opposite end to the leaf spring 4. The configuration of the drive screw 2 is the same as is shown in Figure 2 but the guide member 3a is modified so that in addition to the arms 17 and 18 it has arms 17a and 18a extending in the opposite direction to embrace the second leaf spring 4a. Operation of the device is essentially the same as operation of the device of Figures 1 to 10, except that movement of the modified guide member 3a causes lowering and raising of both leaf springs 4 and 4a.

Figure 16 illustrates an alternative modification to the device of Figures 1 to 10 adapted to incorporate a second leaf spring 4b in addition to the first leaf spring 4. In this embodiment of the invention, the second leaf spring 4b is essentially pivoted at the same point as the first leaf spring 4 but extends in the opposite direction. The leaf spring 4b is biased down towards the ground by a spring member 22 which is attached to the inner surface of the upper wall of the housing 1. Movement of the leaf spring 4b is however restricted by one end of a support member 23 which extends from the drive screw 2, from a position above the guide member 3. The arrangement is such that the support member 23 follows the movement of the guide member 3 so that as guide member 3 is raised or lowered the leaf spring 4b is also raised and lowered. When in the lowered, ground engaging, position the spring member 22 will bias the leaf spring 4b into continued contact with the ground.

Many other modifications to the above described structure will be evident to the appropriate skilled person. For instance, as an alternative to the drive screw 2, some form of electrical, hydraulic or pneumatic actuation means could be incorporated in the device to control the movement of the leaf spring 4.

Furthermore, although use of a leaf spring has advantages it will be appreciated that a simple rigid member could be used as an alternative.

It will further be appreciated that many other forms of ground engaging member could be employed. For example, the ground engaging member could be a reciprocating or telescopic member. As a further alternative, the ground engaging member could comprise a number of elements linked together in a "lazy tongs" arrangement. A wide variety of actuating mechanisms could be employed from simple manual mechanisms to electric, pneumatic and hydraulic arrangements.

It will be understood that devices according to the present invention can be fitted to vehicles of a wide variety of size and type (powered or non-powered), including cars, caravans and non-wheeled vehicles. Appropriate modifications to the device described above to suit any particular vehicle will be evident to the appropriately skilled person.

## Claims

1. A vehicle immobiliser comprising at least one ground engaging member (4) which is in use fixed to the vehicle and which is moveable between a stowed position in which it is carried by the vehicle and a ground engaging position in which it is under load from the weight of the vehicle and inhibits movement of the vehicle,
characterised in that, when in said ground engaging position, the ground engaging member is continuously urged towards the ground by a spring biasing force.

2. A vehicle immobiliser according to claim 1. wherein said spring biasing force is provided by a pneumatic or mechanical spring means acting on the ground engaging member (4).

3. A vehicle immobiliser according to claim 1, wherein the ground engaging member is a spring member (4) which is held under tension by the weight of the vehicle when in said ground engaging position.

4. A vehicle immobiliser according to any preceding claim, wherein the ground engaging member is an elongate member which is pivotably fixed to the vehicle and has a ground engaging end which contacts the ground when in said ground engaging position, and wherein drive means (2, 3) are provided for pivoting the ground engaging member to raise and lower said ground engaging end to thereby move the ground engaging member between said stowed and ground engaging positions respectively.

5. A vehicle immobiliser according to claim 4, wherein the drive means comprises a drive screw (2) rotation of which in one direction moves the ground engaging member from said stowed position to said ground engaging position, and rotation of which in the opposite direction returns the ground engaging member to the stowed position.

6. A vehicle immobiliser according to claim 5, wherein the drive means further comprises a guide (3) mounted to the drive screw (2) such that rotation of the drive screw moves the guide member in the direction of the axis of drive screw, the guide member co-operating with the ground engaging member (4) so that movement of the guide member in opposite directions raises and lowers the ground engaging member respectively.

7. A vehicle immobiliser according to claim 6, wherein the immobiliser is provided with a plurality of ground engaging members (4, 4a ; 4, 4b), said guide member (3) co-operating with each ground engaging member so that movement of the guide member in opposite directions raises and lowers each ground engaging member simultaneously.

8. A vehicle immobiliser according to claim 6 or claim 7, wherein the drive screw (2) is captive and the guide member (3) moves along the shaft (12) of the drive screw as it rotates.

9. A vehicle immobiliser according to any one of claims 6 to 8, wherein the guide member (3) is a forked member having at least one pair of arms (17, 18) and wherein the or each pair of arms slidably embraces a respective ground engaging member (4).

10. A vehicle immobiliser according to any one of claims 4 to 9, wherein the drive means is adapted to be manually operated using a suitable tool.

11. A vehicle immobiliser according to any one of claims 4 to 9, wherein the drive means is electrically actuated.

12. A vehicle immobiliser according to claim 4, wherein the drive means comprises a pneumatic or hydraulic actuator.

13. A vehicle immobiliser according to claim 1 or claim 2, wherein the ground engaging member is a telescopic member.

14. A vehicle immobiliser according to claim 1 or claim 2, wherein the ground engaging member is an elongate member which is mounted to the vehicle for reciprocating movement between said stowed and ground engaging positions.

15. A vehicle immobiliser according to claim 1 or claim 2, wherein the ground engaging member comprises a plurality of elements linked together in a lazy tongs arrangement.

16. A vehicle immobiliser according to claim 13 to 15, wherein the ground engaging member is electrically actuated.

17. A vehicle immobiliser according to any one of claims 13 to 16, wherein the ground engaging member is pneumatically or hydraulically actuated.

18. A vehicle fitted with one or more vehicle immobilisers according to any preceding claim.

## Patentansprüche

1. Fahrzeug-Wegfahrsperre, die wenigstens ein Bodeneinrückelement (4) aufweist, das bei der Benutzung am Fahrzeug befestigt ist und das zwischen einer eingezogenen Position, in der es durch das Fahrzeug mitgeführt wird, und einer Bodeneinrückposition bewegt werden kann, in der es unter Last durch das Gewicht des Fahrzeugs ist und die Bewegung des Fahrzeugs verhindert, dadurch gekennzeichnet, daß das Bodeneinrückelement in der Bodeneinrückposition durch eine Federvorspannkraft ständig zum Boden hin gedrückt wird.

2. Fahrzeug-Wegfahrsperre nach Anspruch 1, bei der die Federvorspannkraft durch pneumatische oder mechanische Federmittel, die auf das Bodeneinrückelement (4) wirken, bereitgestellt wird.

3. Fahrzeug-Wegfahrsperre nach Anspruch 1, bei der das Bodeneinrückelement ein Federelement (4) ist, das durch das Gewicht des Fahrzeugs unter Spannung gehalten wird, wenn es sich in der Bodeneinrückposition befindet.

4. Fahrzeug-Wegfahrsperre nach einem der vorhergehenden Ansprüche, bei der das Bodeneinrückelement ein längliches Element ist, das gelenkig an dem Fahrzeug befestigt ist und ein Bodeneinrückende hat, das den Boden kontaktiert, wenn es sich in der Bodeneinrückposition befindet, und bei der Antriebsmittel (2, 3) bereitgestellt werden, um das Bodeneinrückelement zu schwenken, um das Bodeneinrückende anzuheben und abzusenken, um dadurch das Bodeneinrückelement zwischen der eingezogenen bzw. der Bodeneinrückposition zu bewegen.

5. Fahrzeug-Wegfahrsperre nach Anspruch 4, bei der die Antriebsmittel eine Antriebsschraube (2) aufweisen, deren Drehung in einer Richtung das Bodeneinrückelement aus der eingezogenen Position in die Bodeneinrückposition bewegt, und deren Drehung in der entgegengesetzten Richtung das Bodeneinrückelement zurück in die eingezogene Position bewegt.

6. Fahrzeug-Wegfahrsperre nach Anspruch 5, bei der die Antriebsmittel außerdem eine Führung (3) aufweisen, die an der Antriebsschraube (2) angebracht ist, derartig, daß die Drehung der Antriebsschraube das Führungselement in der Richtung der Achse der Antriebsschraube bewegt, wobei das Führungselement mit dem Bodeneinrückelement (4) zusammenwirkt, so daß durch die Bewegung des Führungselements in entgegengesetzten Richtungen das Bodeneinrückelement angehoben bzw. abgesenkt wird.

7. Fahrzeug-Wegfahrsperre nach Anspruch 6, bei der die Wegfahrsperre mit einer Vielzahl von Bodeneinrückelementen (4, 4a; 4, 4b) versehen ist, wobei das Führungselement (3) mit jedem Bodeneinrückelement zusammenwirkt, so daß durch die Bewegung des Führungselements in entgegengesetzten Richtungen die einzelnen Bodeneinrückelemente gleichzeitig angehoben und abgesenkt werden.

8. Fahrzeug-Wegfahrsperre nach Anspruch 6 oder Anspruch 7, bei der die Antriebsschraube (2) unverlierbar ist und das Führungselement (3) sich längs des Schaftes (12) der Antriebsschraube bewegt, während sich diese dreht.

9. Fahrzeug-Wegfahrsperre nach einem der Ansprüche 6 bis 8, bei der das Führungselement (3) ein gabelförmiges Element ist, das wenigstens ein Paar Arme (17, 18) hat, und bei der das oder jedes Paar Arme gleitfähig ein entsprechendes Bodeneinrückelement (4) umfaßt.

10. Fahrzeug-Wegfahrsperre nach einem der Ansprüche 4 bis 9, bei der die Antriebsmittel dafür geeignet sind, unter Anwendung eines geeigneten Werkzeugs von Hand betätigt zu werden.

11. Fahrzeug-Wegfahrsperre nach einem der Ansprüche 4 bis 9, bei der die Antriebsmittel elektrisch betätigt werden.

12. Fahrzeug-Wegfahrsperre nach Anspruch 4, bei der die Antriebsmittel ein pneumatisches oder hydraulisches Stellglied umfassen.

13. Fahrzeug-Wegfahrsperre nach Anspruch 1 oder Anspruch 2, bei der das Bodeneinrückelement ein ausziehbares Element ist.

14. Fahrzeug-Wegfahrsperre nach Anspruch 1 oder Anspruch 2, bei der das Bodeneinrückelement ein längliches Element ist, das für eine hin- und hergehende Bewegung zwischen der eingezogenen und der Bodeneinrückposition am Fahrzeug angebracht ist.

15. Fahrzeug-Wegfahrsperre nach Anspruch 1 oder 2, bei der das Bodeneinrückelement eine Vielzahl von Elementen aufweist, die in einer Scherenspreizanordnung miteinander verbunden sind.

16. Fahrzeug-Wegfahrsperre nach Anspruch 13 bis 15, bei der das Bodeneinrückelement elektrisch betätigt wird,

17. Fahrzeug-Wegfahrsperre nach Anspruch 13 bis 16, bei der das Bodeneinrückelement pneumatisch oder hydraulisch betätigt wird.

18. Fahrzeug, das mit einer oder mehreren Fahrzeug-Wegfahrsperren nach einem der vorhergehenden Ansprüche ausgestattet ist.

## Revendications

1. Dispositif d'immobilisation d'un véhicule comprenant au moins un élément entrant en contact avec le sol (4), fixé en service au véhicule et pouvant se déplacer entre une position repliée, dans laquelle il est supporté par le véhicule, et une position de contact avec le sol dans laquelle il est soumis à la charge du poids du véhicule et empêche le déplacement du véhicule, caractérisé en ce que dans ladite position de contact avec le sol, l'élément entrant en contact avec le sol est poussé en continu vers le sol par une force de contrainte d'un ressort.

2. Dispositif d'immobilisation d'un véhicule selon la revendication 1, dans lequel ladite force de contrainte de ressort est appliquée par un moyen de ressort pneumatique ou mécanique agissant sur l'élément venant en contact avec le sol (4).

3. Dispositif d'immobilisation d'un véhicule selon la revendication 1, dans lequel l'élément venant en contact avec le sol est un élément de ressort (4) maintenu sous tension par le poids du véhicule lorsqu'il se trouve dans ladite position de contact avec le sol.

4. Dispositif d'immobilisation d'un véhicule selon l'une quelconque des revendications précédentes, dans lequel l'élément venant en contact avec le sol est un élément allongé fixé par pivotement au véhicule et comportant une extrémité venant en contact avec le sol contactant le sol dans ladite position de contact avec le sol, des moyens d'entraînement (2, 3) servant à faire pivoter l'élément venant en contact avec le sol pour soulever et abaisser ladite extrémité venant en contact avec le sol, pour déplacer ainsi respectivement l'élément venant en contact avec le sol entre ladite position repliée et ladite position de contact avec le sol.

5. Dispositif d'immobilisation d'un véhicule selon la revendication 4, dans lequel le moyen d'entraînement comprend une vis d'entraînement (2), dont la rotation dans une direction entraîne le déplacement de l'élément venant en contact avec le sol de ladite position repliée vers ladite position de contact avec le sol, et dont la rotation dans la direction opposée entraîne le retour de l'élément venant en contact avec le sol vers la position repliée.

6. Dispositif d'immobilisation d'un véhicule selon la revendication 5, dans lequel le moyen d'entraînement comprend en outre un guide (3), monté sur la vis d'entraînement (2), de sorte que la rotation de la vis d'entraînement entraîne le déplacement de l'élément de guidage dans la direction de l'axe de la vis d'entraînement, l'élément de guidage coopérant avec l'élément venant en contact avec le sol (4), de sorte que le déplacement de l'élément de guidage dans des directions opposées entraîne respectivement le soulèvement et l'abaissement de l'élément venant en contact avec le sol.

7. Dispositif d'immobilisation d'un véhicule selon la revendication 6, dans lequel le dispositif d'immobilisation comporte plusieurs éléments venant en contact avec le sol (4, 4a; 4, 4b), ledit élément de guidage (3) coopérant avec chaque élément venant en contact avec le sol, de sorte que le déplacement de l'élément de guidage dans des directions opposées entraîne simultanément le soulèvement et l'abaissement de chaque élément venant en contact avec le sol.

8. Dispositif d'immobilisation d'un véhicule selon les revendications 6 ou 7, dans lequel la vis d'entraînement (2) est captive, l'élément de guidage (3) se déplaçant le long de l'arbre (12) de la vis d'entraînement lors de sa rotation.

9. Dispositif d'immobilisation d'un véhicule selon l'une quelconque des revendications 6 à 8, dans lequel l'élément de guidage (3) est un élément à fourche comprenant au moins une paire de bras (17, 18), la ou chaque paire de bras entourant par glissement un élément respectif venant en contact avec le sol (4).

10. Dispositif d'immobilisation d'un véhicule selon l'une quelconque des revendications 4 à 9, dans lequel l'élément d'entraînement est destiné à être actionné manuellement par l'intermédiaire d'un outil approprié.

11. Dispositif d'immobilisation d'un véhicule selon l'une quelconque des revendications 4 à 9, dans lequel l'élément d'entraînement est actionné électriquement.

12. Dispositif d'immobilisation d'un véhicule selon la revendication 4, dans lequel l'élément d'entraînement comprend un dispositif d'actionnement pneumatique ou hydraulique.

13. Dispositif d'immobilisation d'un véhicule selon les revendications 1 ou 2, dans lequel l'élément venant en contact avec le sol est un élément téléscopique.

14. Dispositif d'immobilisation d'un véhicule selon les revendications 1 ou 2, dans lequel l'élément venant en contact avec le sol est un élément allongé, monté sur le véhicule pour effectuer un mouvement de va-et-vient entre lesdites positions repliée et de contact avec le sol.

15. Dispositif d'immobilisation d'un véhicule selon les revendications 1 ou 2, dans lequel l'élément venant en contact avec le sol comprend plusieurs éléments reliés dans un agencement à articulation en ciseaux (à pince extensible).

16. Dispositif d'immobilisation d'un véhicule selon les revendications 13 à 15, dans lequel l'élément venant en contact avec le sol est actionné électriquement.

17. Dispositif d'immobilisation d'un véhicule selon les revendications 13 à 16, dans lequel l'élément venant en contact avec le sol est actionné pneumatiquement ou hydrauliquement.

18. Véhicule équipé d'un ou de plusieurs dispositifs d'immobilisation de véhicule selon l'une quelconque des revendications précédentes.
